# EUROPEAN PATENT SPECIFICATION

(11) **EP 2 741 449 B1**
(45) Date of publication and mention of the grant of the patent: **19.08.2015**
(21) Application number: 13193003.4
(22) Date of filing: 15.11.2013
(51) Int. Cl.: H04L 12/26

(54) **Processing of call data records**
Verarbeitung von Anrufdatenaufzeichnungen
Traitement d'enregistrements de données d'appel

(30) Priority: 10.12.2012 FI 20126286
(43) Date of publication of application: 11.06.2014
(73) Proprietor: EXFO Oy, 90590 Oulu (FI)
(72) Inventor: Ikäheimo, Jorma, 90590 OULU (FI)
(74) Representative: Kolster Oy Ab

(56) References cited:
- EP-A1- 2 469 761
- US-B1- 7 933 263
- US-B1- 7 991 917
- US-B1- 8 132 089

## Description

### Field

The invention relates generally to processing of call data records and specifically to an apparatus, a method, and a computer-readable medium used for the processing.

### Background

Monitoring of a live telecommunications network yields a massive amount of information. US 7,640,015 discloses processing of call data records. However, further sophistication is desirable in order to process the information in a more efficient way, both regarding the required storage space and the required amount of processing. Furthermore, manual operator work should be kept to a minimum. EP 2469761 discloses topology detection of LTE nodes.

### Brief description

The present invention seeks to provide an improved apparatus, method, and computer readable medium.

According to an aspect of the present invention, there is provided an apparatus as specified in claim 1.

According to another aspect of the present invention, there is provided a method as specified in claim 12.

According to another aspect of the present invention, there is provided a computer readable medium as specified in claim 13.

### List of drawings

Example embodiments of the present invention are described below, by way of example only, with reference to the accompanying drawings, in which
Figures 1, 3 and 5 are simplified diagrams illustrating various example embodiments of an apparatus; and
Figure 2 and 4 illustrate various example embodiments of filtering.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments of apparatuses, they are simplified block diagrams that only show some structures and functional entities. The connections shown in these Figures are logical connections; the actual physical connections may be different. Interfaces between the various elements may be implemented with suitable interface technologies, such as a message interface, a method interface, a sub-routine call interface, a block interface, or any hardware/software means enabling communication between functional sub-units. It is apparent to a person skilled in the art that the described apparatuses may also comprise other functions and structures. It should be appreciated that details of some functions, structures, and the protocols used for communication are irrelevant to the actual invention. Therefore, they need not be discussed in more detail here.

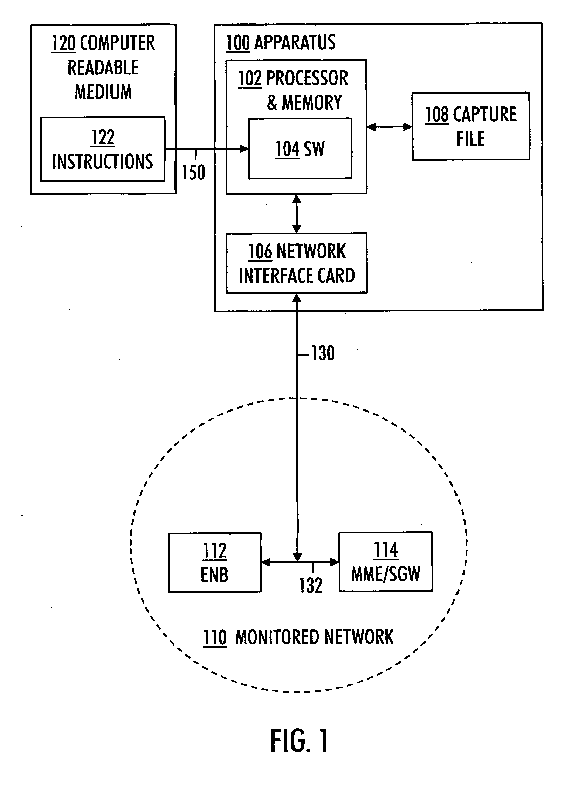

Figure 1 illustrates an example embodiment of an apparatus 100. The apparatus 100 may be any electronic apparatus capable of processing data as described in the following. A non-exhaustive list of the types of the apparatus 100 includes: an electronic digital computer, a desktop computer, a portable computer, a laptop computer, a tablet computer, or any other electronic apparatus performing the processing such as at least one rack-mounted processing unit. The apparatus 100 may employ an operating system such as Microsoft Windows, Apple Mac OS X, or Linux, for example. Besides being a single apparatus 100, the apparatus 100 may be implemented in a distributed fashion employing communicatively coupled sub-units.

In an example embodiment, the apparatus 100 is a computer running protocol analyzer software 104. The software 104 may be easily modified from existing protocol analyzer software such as EXFO PowerHawk Pro. The software 104 may implement a user interface, which allows controlling the operations of the apparatus 100 and monitoring the results of the operations carried out by the apparatus 100.

A network interface card 106 may be used to capture data packets 132 from a monitored telecommunications network 110. Special high performance network interface cards 106 are available from various vendors. The network interface card 106 may be connected to the telecommunications network 110 passively through a connection 130, either using a pass-through connection or a network tap. The network interface card 106 may timestamp and deliver data to the software 104 for (real-time or almost real-time) analysis or to be stored into a capture file 108 (for non-real-time analysis). Note that in the example embodiment of Figure 1, the capture and the analysis are performed in a single apparatus 100, although the capture and the analysis may be performed by separate apparatuses, in which case the captured data packets 132 are transferred by a wired or wireless connection or by some other medium (such as a memory device) from the capture apparatus to the analysis apparatus.

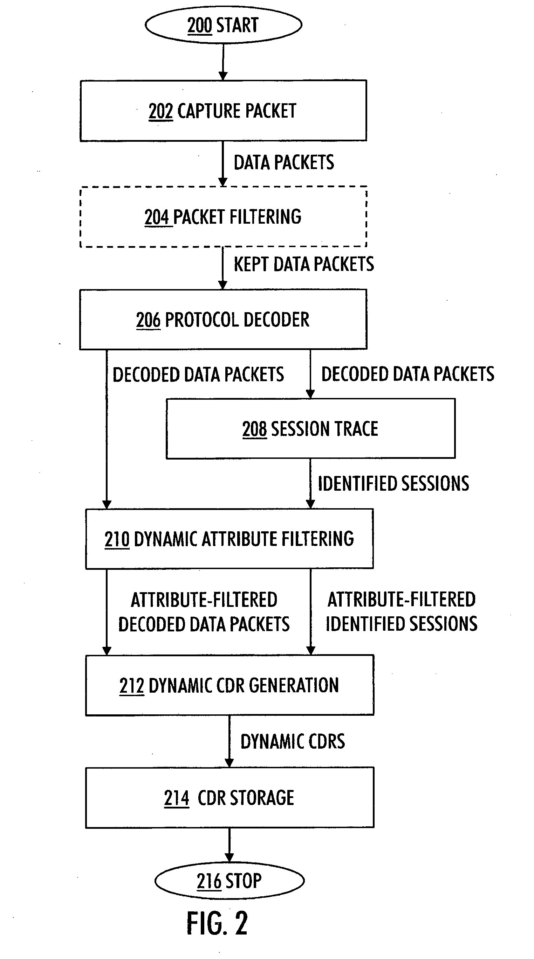

The monitored telecommunications network 110 may in principle be any telecommunications network, wired or wireless, or any sub-network of such a network such as a transmission network coupling the networks nodes. In the example embodiment illustrated in Figure 2, an LTE (Long Term Evolution) S1 interface 132 between an evolved node B (eNB) 112 and a mobile management entity (MME) / serving gateway (SGW) 114 is monitored, but the monitoring may be directed to other interface as well, such as those described in telecommunications standard specifications (of the 3GPP, for example).

The apparatus 100 comprises one or more processors 102 and one or more memories 102 including computer program code 104. The processor 102 and the memory 102 may be implemented by electronic circuitry.

The term 'processor' 102 refers to a physical device that is capable of processing data in a computer or other digital electronic device. Depending on the processing power needed, the apparatus 100 may comprise several processors 102 such as parallel processors or one or more multicore processors. A non-exhaustive list of implementation techniques for the processor 102 includes, but is not limited to: logic components, standard integrated circuits, application-specific integrated circuits (ASIC), system-on-a-chip (SoC), application-specific standard products (ASSP), microprocessors, digital signal processors, special-purpose computer chips, and field-programmable gate arrays (FPGA).

The term 'memory' 102 refers to a physical device that is capable of storing the computer program code 104 and data on a temporary or permanent basis for use in a computer or other digital electronic device. In an example embodiment, the term 'memory' refers to working memory (also known as primary storage, main memory or internal storage) directly accessible to the processor. In an example embodiment, the working memory may be implemented as a random-access memory (RAM), such as a dynamic RAM, DRAM.

In Figure 2, an example embodiment of the basic analysis process is illustrated. Analysis may be performed in an online or offline manner. During the online analysis, packets captured by the network interface card 106 are instantly (without unnecessary delays) analyzed utilizing the process described in Figure 2. In the offline analysis, packets are first recorded into the capture file 108, and, after an undefined period, the capture file 108 is analyzed utilizing the process described in Figure 2.

The analysis process begins in 200.

In 202, the one or more memories 102 and the computer program code 104 are configured to, with the one or more processors 100, cause the apparatus 100 to obtain data packets 132 captured from the monitored telecommunications network 110. The data packets 132 may be captured for analysis, either from the capture file 108 in the offline case, or from a memory buffer, coupled with the network interface card 106 or with the processor 102, for example, in the online case.

In an example embodiment of 204, the one or more memories 102 and the computer program code 104 are configured to, with the one or more processors 100, cause the apparatus 100 to, if the data packets 132 are obtained in order to analyze the control plane of the monitored telecommunications network 110, keep data packets 132 relating to the control plane and discard data packets 132 relating to the user plane before decoding the data packets, or, if the data packets 132 are obtained in order to analyze the user plane of the monitored telecommunications network 110, keep data packets 132 relating to the user plane and discard data packets 132 relating to the control plane before decoding the data packets 132. Hence, incoming data packets 132 may be filtered in order to filter in only data packets 132 relevant to the current analysis task. In case of control plane analysis (such as LTE S1), the user plane (or the data plane, or the bearer plane) packets 132 are filtered out, for example. Filters may be set using the so-called Berkley Packet Filter (BPF) rules, for example, as ready-made implementations for the BPF are readily available.

The term 'user' as in the user plane refers to a user of the telecommunications network, such as a user of a subscriber terminal (user equipment UE, a radio terminal, a subscriber terminal, smartphone, mobile station, mobile phone, portable computer, pad computer, laptop, tablet etc.) or some other type of communication device (operating with or without a subscriber identification module SIM, for example), and interacting with the wired and/or the wireless telecommunications network 110.

In 206, the one or more memories 102 and the computer program code 104 are configured to, with the one or more processors 100, cause the apparatus 100 to decode the data packets 132 by a protocol decoder stack in order to generate decoded data packets, each decoded data packet comprising protocol attributes.

In an example embodiment, the one or more memories 102 and the computer program code 104 are configured to, with the one or more processors 100, cause the apparatus 100 to generate protocol attributes as a direct result of the decoding of the data packets 132 by the protocol decoder stack, and/or generate protocol attributes on the basis of analyzing results of the decoding of the data packets 132 by the protocol decoder stack.

The decoder stack may include all relevant decoders for the current analysis task. In case of LTE S1 control plane analysis, the decoding stack includes Ethernet, IP (Internet Protocol), SCTP (Stream Control Transmission Protocol, S1AP (S1 Application Protocol) and NAS (Non-Access Stratum Protocol) decoders, for example. During the decoding, all protocol attributes (including protocol information elements, for example) that are required in session trace 208 and in attribute filtering 210 are decoded.

In 208, the one or more memories 102 and the computer program code 104 are configured to, with the one or more processors 100, cause the apparatus 100 to identify sessions from among the decoded data packets 132 in order to generate identified sessions, each identified session comprising session attributes.

In an example embodiment, the identified sessions comprise calls, data transmission, packet-switched communication sessions, and/or circuit-switched communication sessions.

The session trace 208 may be performed in order to map the incoming data packets 132 into sessions (and calls). LTE S1 sessions may be identified using MME UE S1AP ID and ENB UE S1AP ID pair as an identifier, for example. For each session, a unique session identifier may be allocated for identifying the session during its lifetime. The session identifier and the collected session attributes are delivered to a dynamic attribute filtering block 210. Session attributes may include various attributes that are not available as direct decoding results, duration of the session, for example, etc.

In 210, the one or more memories 102 and the computer program code 104 are configured to, with the one or more processors 100, cause the apparatus 100 to filter the decoded data packets 132 and the identified sessions with a dynamic filter determining adjustable conditions for the protocol attributes and the session attributes such that the decoded data packets 132 and the identified sessions fulfilling the adjustable conditions are kept in order to get attribute-filtered decoded data packets 132 and attribute-filtered identified sessions.

In an example embodiment, the adjustable conditions comprise at least one of the following: a failed session, a session from a certain user, a session comprising an information element with a certain value.

In an example embodiment, the one or more memories 102 and the computer program code 104 are configured to, with the one or more processors 100, cause the apparatus 100 to generate key performance indicators from the identified sessions, and perform the filtering in 210 of the decoded data packets 132 and the identified sessions with the dynamic filter if at least one of the key performance indicators fulfill a predetermined performance condition. The key performance indicators may include number of sessions/call, failure rate, and other such summary attributes that are generated from all identified sessions.

In an example embodiment, the one or more memories 102 and the computer program code 104 are configured to, with the one or more processors 100, cause the apparatus 100 to perform the generation of the key performance indicators from the identified sessions continuously for each obtained data packet 132, and start to perform the filtering of the decoded data packets and the identified sessions with the dynamic filter in 210 starting from the obtained data packet 132 with which at least one of the key performance indicators fulfills the predetermined performance condition. In such a manner, the key performance indicators may be implemented in a sliding window fashion.

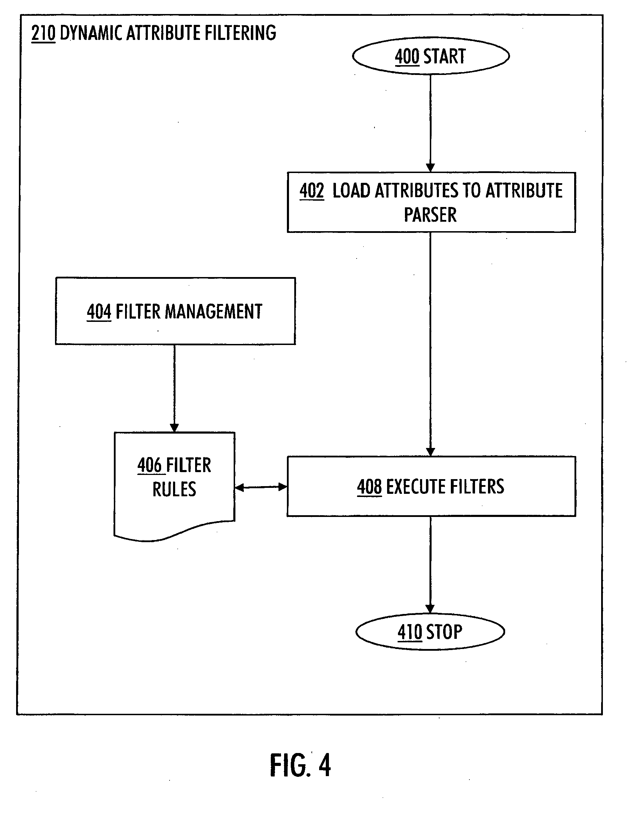

The attribute filtering may be performed to filter in interesting calls. Interesting calls may be failed calls, calls from certain user, calls containing an information element having certain value etc. When a filtering rule matches, the information about the matched filter rules may be delivered to a dynamic call data record (CDR) generation block 212 and the received attributes may be used to form a call data record. The call data record may be a subset of the attributes collected in order to minimize storage space needed for storing the call data records. The dynamic attribute filtering 210 is further described in Figure 4.

In an example embodiment, the one or more memories 102 and the computer program code 104 are configured to, with the one or more processors 100, cause the apparatus 100 to define the adjustable conditions of the dynamic filter using a naming scheme for the attributes, and mathematical expressions directed to the values of the protocol attributes and the session attributes.

In an example embodiment, the one or more memories 102 and the computer program code 104 are configured to, with the one or more processors 100, cause the apparatus 100 to define the dynamic filter using a parser and/or a parsing library.

In 212, the one or more memories 102 and the computer program code 104 are configured to, with the one or more processors 100, cause the apparatus 100 to generate dynamic call data records such that their structure and contents are determined dynamically on the basis of the attribute-filtered decoded data packets 132 and the attribute-filtered identified sessions.

In an example embodiment, the one or more memories 102 and the computer program code 104 are configured to, with the one or more processors 100, cause the apparatus 100 to generate the dynamic call data records such that predetermined attributes are kept and rest of the attributes are discarded, the predetermined attributes depending on a desired point of view into the monitored telecommunications network 110.

In 214, the one or more memories 102 and the computer program code 104 are configured to, with the one or more processors 100, cause the apparatus 100 to store the dynamic call data records generated in 212 on the basis of the 210.

Processing stops in 216 after analysis is completed.

The described apparatus 100 may provide flexible filtering based on the protocol and session attributes, and such filtering may not be limited to the contents of the call data record. Such flexible filtering saves call data record storage space, as it is not necessary to store the attributes used in the filtering to the actual call data records.

Figure 4 illustrates further example embodiments of the dynamic attribute filtering 210. The filters may be defined using mathematical expressions and attribute values. The filtering system may be created such that the attributes may be referred with attribute names. In an example embodiment, the naming is such that for the protocol attributes it uses the syntax "protocol.attributename", for the session attributes it uses the syntax "session.attributename", and for the status attributes (= key performance indicators) it uses the syntax "status.attributename". With such a naming scheme, the attributes may be referred to as follows, for example: "S1.msg_type==1 or session.imsi==112233 or status.failureratio>10".

The filters may easily be implemented using a parsing library, such as muParser, that is an open source fast math parsing library. Some filters may include actions that are executed when the filter matches, for example to notify the user about the matching filter. Another action may be the creation of a "filter in"- filter, in the case that a call failure rate exceeds a certain predefined rate, for example.

Filter management 404 is an API (application programming interface) for managing the filters. Filter management API may include commands to add, remove, alter and list the filters and to get statistics about the filtering (matched count per filter, for example).

The filters may be stored into filter rules storage 406 for retrieval during a start-up. The filter rules are passed to the filtering library for parsing in execution 408 of the filters.

The attribute filtering starts in 400, the filtering is started after processing of a data packet 132 belonging to a session is completed.

In 402, attributes are loaded to a filter rule parser 512 so that it has access to status attributes 514, session attributes 506 and protocol attributes 510.

In 408, the filter rules are executed by the filter rule parser 512. In case a filter matches, a status attribute indicating the filter rule in question is updated and possible filter actions are executed.

Attribute filtering stops in 410 after attribute filtering is done.

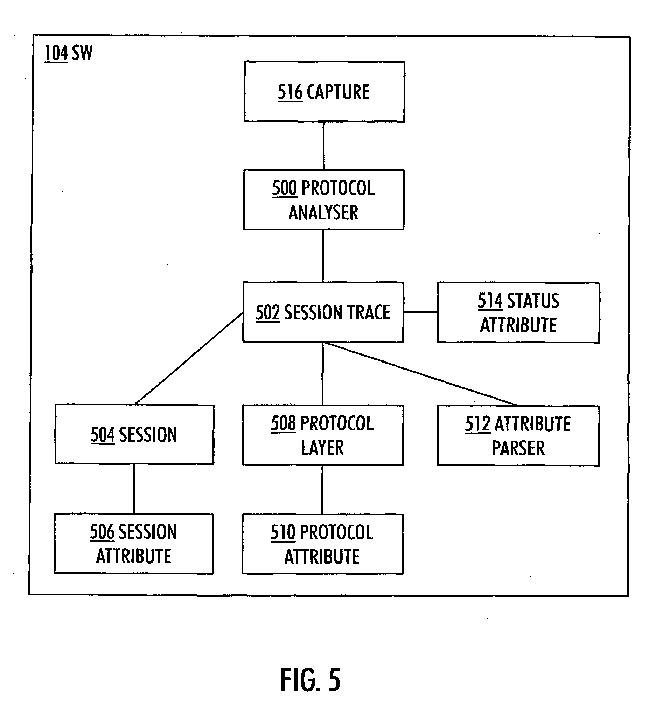

Figure 5 illustrates a high level class model implementing the software 104.

A protocol analyzer 500 is the main class controlling the functionality. The protocol analyzer 500 instantiates a capture 516 and a session trace 502.

The capture 516 takes care of capturing 202 data packets 132 from the network interface card 106 or from a capture file 108, and packet filtering 204. The data packets are delivered to the session trace 502 for an analysis.

The session trace 502 implements the protocol decoder 206. It instantiates a protocol layer 508 for each protocol needed in protocol analysis and connects them to create the suitable protocol stack for the protocol analysis. The session trace 502 also implements the attribute filtering 210, CDR generation 212, CDR storage 214, and filter management 404. The session trace 502 instantiates a filter rule parser 512 for parsing filter rules. The session trace 502 subscribes the attributes necessary for the call and session tracing from the protocol decoders 508. When attributes are received, a session 504 representing the session in the monitored network is created. The session 504 contains session attributes 506 such as message counters and call identification such as IMSI (international mobile subscriber identity) etc. During decoding of the data packet, the session attributes are updated on the basis of the protocol attributes. The session trace 502 also contains status attributes (= earlier mentioned key performance indicators) 514 representing state of protocol analysis, like number of calls, failed calls etc.

Each protocol layer 508 contains multiple protocol attributes 510 for storing values of decoded information elements, counting number of different protocol data units (PDU) etc. When a packet is received by the session trace 502, the packet (that may also be called as protocol data unit PDU), is delivered to the lowest protocol layer 508. The lowest protocol layer 508 decodes the protocol data unit and sets the values of the protocol attributes 510 according to the decoded contents, and delivers the protocol attributes 510 to the attribute filtering 210, and to upper protocol layers as needed for the decoding. After the protocol data unit is fully decoded by the protocol layer 508, the contained service data unit (SDU), the next layer protocol data unit, is delivered to the next protocol layer for analysis.

After all of the protocol layers are analyzed, the dynamic attribute filtering 210 is performed as described in Figure 4.

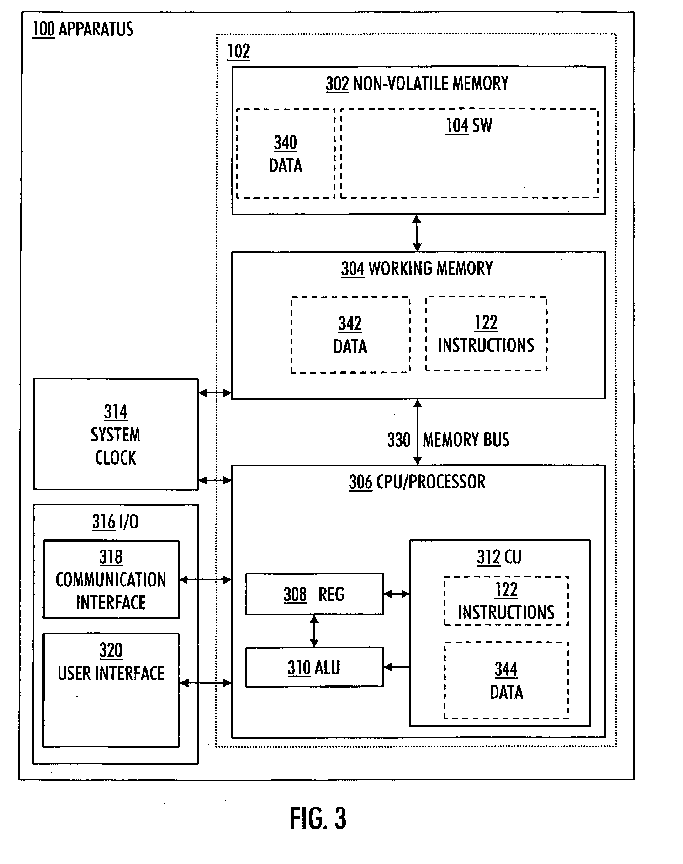

In an example embodiment illustrated in Figure 3, the apparatus 100 may be an electronic digital computer, which may comprise a non-volatile memory 302, a working memory 304, a processor 306, a system clock 314 and an input/output 316 including a communication interface 318 and a user interface 320. Naturally, the computer may comprise a number of other peripheral devices, not illustrated here for the sake of clarity.

In an example embodiment, the system clock 314 constantly generates a stream of electrical pulses, which cause the various transferring operations within the computer to take place in an orderly manner and with specific timing.

In an example embodiment, the processor 306 may be implemented as a microprocessor implementing functions of a central processing unit (CPU) on an integrated circuit. The CPU 306 is a logic machine executing a computer program 104, which comprises program instructions 122. The computer program 104 may be coded as a computer program using a programming language, which may be a high-level programming language, such as C, C++, or Java, or a low-level programming language, such as a machine language, or an assembler. There are many ways to structure the program 104. In an example embodiment, the operations of the program may be divided into functional modules, sub-routines, methods, classes, objects, applets, macros, etc., depending on the software design methodology and the programming language used. In modern programming environments, there are software libraries, i.e. compilations of ready-made functions, which may be utilized by the program for performing a wide variety of standard operations.

The CPU 306 may comprise a set of registers 308, an arithmetic logic unit (ALU) 310, and a control unit (CU) 312. The control unit 312 is controlled by a sequence of instructions 122 transferred to the CPU 306 from the working memory 304. The working memory 304 is directly or indirectly connected to the CPU 306 via a memory bus 330 including two buses: an address bus and a data bus. The CPU 306 sends a memory address indicating the desired location of data (= data 342 and instructions 122) number through the address bus, whereupon the CPU 306 reads or writes the data 342, 122, 344 from/to the working memory 304 using the data bus.

The control unit 312 may contain a number of microinstructions for basic operations. The implementation of the microinstructions may vary, depending on the CPU design. The microprocessor 306 may also have an operating system (such as general-purpose operating system, a dedicated operating system of an embedded system, or a real-time operating system), which may provide the computer program 104 with system services. During running of the program 104, the instructions 122 are transferred via the memory bus 330 from the working memory 304 into the control unit 312, wherein usually a portion of the instructions 122 resides and controls the operation.

In an example embodiment, the non-volatile memory 302 retains the stored information even when not powered. Examples of non-volatile memory include read-only memory (ROM), flash memory, magnetic computer storage devices such as hard disk drives, and optical discs. As is shown in Figure 3, the non-volatile memory 302 may store both data 340 (such as settings data, analysis results, call data records etc.) and the computer program 104 comprising the instructions 122.

An example embodiment, illustrated in Figure 1, provides a computer readable medium 120 comprising the set of the instructions 122, which, when executed on the apparatus 100 cause the apparatus 100 to perform the required operations. In an example embodiment, the instructions 122 may be in source code form, object code form, or in some intermediate form. The computer-readable medium 120 may comprise at least the following: any entity or device capable of carrying 150 the instructions 122 to the apparatus 100, a record medium, a computer memory, a read-only memory, an electrical carrier signal, a telecommunications signal, and a software distribution medium. In some jurisdictions, depending on the legislation and the patent practice, the medium 120 may not be the telecommunications signal. In an example embodiment, the medium 120 may be a non-transitory computer readable storage medium.

Next, example embodiments of a method will be described with reference to Figure 2. Other functions, not described in this application, may also be executed between the operations or within the operations. Some of the operations or parts of the operations may also be left out or replaced by a corresponding operation or part of the operation.

The method starts in 200.

In 202, data packets captured from a monitored telecommunications network are obtained.

In 206, the data packets are decoded by a protocol decoder stack in order to generate decoded data packets, each decoded data packet comprising protocol attributes.

In 208, sessions are identified from among the decoded data packets in order to generate identified sessions, each identified session comprising session attributes.

In 210, the decoded data packets and the identified sessions are filtered with a dynamic filter determining adjustable conditions for the protocol attributes and the session attributes such that the decoded data packets and the identified sessions fulfilling the adjustable conditions are kept in order to get attribute-filtered decoded data packets and attribute-filtered identified sessions.

In 212, dynamic call data records are generated such that their structure and contents are determined dynamically on the basis of the attribute-filtered decoded data packets and the attribute-filtered identified sessions.

In 214, the dynamic call data records are stored.

The method ends in 216.

The embodiments of the earlier described apparatus 100 may also be used to enhance the method. In an example embodiment, the method may be implemented in the apparatus 100 described earlier. In an embodiment, a computer program comprises instructions 122, which, when loaded into the apparatus 100, cause the apparatus 100 to perform the described process and its further example embodiments. In an embodiment, a computer readable storage medium comprises the computer program.

Next, further example embodiments of the method will be described. These example embodiments may be freely combined with each other in order to produce further example embodiments for the method.

In an example embodiment, the method further comprises:
if the data packets are obtained in order to analyze the control plane of the monitored telecommunications network, keeping data packets relating to the control plane and discarding data packets relating to the user plane before decoding the data packets; or
if the data packets are obtained in order to analyze the user plane of the monitored telecommunications network, keeping data packets relating to the user plane and discarding data packets relating to the control plane before decoding the data packets.

In an example embodiment, the identified sessions comprise calls, data transmission, packet-switched communication sessions, and/or circuit-switched communication sessions.

In an example embodiment, the method further comprises:
generating protocol attributes as a direct result of the decoding of the data packets by the protocol decoder stack; and/or
generating protocol attributes on the basis of analyzing results of the decoding of the data packets by the protocol decoder stack.

In an example embodiment, the method further comprises:
generating key performance indicators from the identified sessions; and
performing the filtering of the decoded data packets and the identified sessions with the dynamic filter if at least one of the key performance indicators fulfills a predetermined performance condition.

In an example embodiment, the method further comprises:
performing the generation of the key performance indicators from the identified sessions continuously for each obtained data packet; and
starting to perform the filtering of the decoded data packets and the identified sessions with the dynamic filter starting from the obtained data packet with which at least one of the key performance indicators fulfills the predetermined performance condition.

In an example embodiment, the adjustable conditions comprise at least one of the following: a failed session, a session from a certain user, a session comprising an information element with a certain value.

In an example embodiment, the method further comprises:
defining the adjustable conditions of the dynamic filter using a naming scheme for the attributes, and mathematical expressions directed to the values of the protocol attributes and the session attributes.

In an example embodiment, the method further comprises:
defining the dynamic filter using a parser and/or a parsing library.

In an example embodiment, the method further comprises:
generating the dynamic call data records such that predetermined attributes are kept and rest of the attributes are discarded, the predetermined attributes depending on a desired point of view into the monitored telecommunications network.

In an example embodiment, the previous example embodiments may be implemented by an apparatus 100 controlled to perform the operations.

It will be obvious to a person skilled in the art that, as technology advances, the inventive concept can be implemented in various ways. The invention and its embodiments are not limited to the example embodiments described above but may vary within the scope of the claims.

## Claims

1. An apparatus (100) comprising
one or more processors (102), and
one or more memories (102) including computer program code (104),
the one or more memories (102) and the computer program code (104) configured to, with the one or more processors (102), cause the apparatus (100) at least to:
obtain data packets (132) captured from a monitored telecommunications network (110);
decode the data packets (132) by a protocol decoder stack in order to generate decoded data packets, each decoded data packet comprising protocol attributes;
identify sessions from among the decoded data packets (132) in order to generate identified sessions, each identified session comprising session attributes;
filter the decoded data packets (132) and the identified sessions with a dynamic filter determining adjustable conditions for the protocol attributes and the session attributes such that the decoded data packets (132) and the identified sessions fulfilling the adjustable conditions are kept in order to get attribute-filtered decoded data packets (132) and attribute-filtered identified sessions;
generate dynamic call data records such that their structure and contents are determined dynamically on the basis of the attribute-filtered decoded data packets (132) and the attribute-filtered identified sessions; and
store the dynamic call data records.

2. The apparatus of claim 1, wherein the one or more memories (102) and the computer program code (104) are further configured to, with the one or more processors (102), cause the apparatus (100) further to:
if the data packets (132) are obtained in order to analyze the control plane of the monitored telecommunications network (110), keep data packets (132) relating to the control plane and discard data packets (132) relating to the user plane before decoding the data packets (132), or
if the data packets (132) are obtained in order to analyze the user plane of the monitored telecommunications network (110), keep data packets (132) relating to the user plane and discard data packets (132) relating to the control plane before decoding the data packets (132).

3. The apparatus of claim 1 or 2, wherein the identified sessions comprise calls, and/or circuit-switched communication sessions.

4. The apparatus of any preceding claim, wherein the identified sessions comprise data transmission, and/or packet-switched communication sessions.

5. The apparatus of any preceding claim, wherein the one or more memories (102) and the computer program code (104) are further configured to, with the one or more processors (102), cause the apparatus (100) further to:
generate protocol attributes as a direct result of the decoding of the data packets (132) by the protocol decoder stack, and/or
generate protocol attributes on the basis of analyzing results of the decoding of the data packets (132) by the protocol decoder stack.

6. The apparatus of any preceding claim, wherein the one or more memories (102) and the computer program code (104) are further configured to, with the one or more processors (102), cause the apparatus (100) further to:
generate key performance indicators from the identified sessions; and
perform the filtering of the decoded data packets (132) and the identified sessions with the dynamic filter if at least one of the key performance indicators fulfills a predetermined performance condition.

7. The apparatus of claim 6, wherein the one or more memories (102) and the computer program code (104) are further configured to, with the one or more processors (102), cause the apparatus (100) further to:
perform the generation of the key performance indicators from the identified sessions continuously for each obtained data packet (132); and
start to perform the filtering of the decoded data packets and the identified sessions with the dynamic filter starting from the obtained data packet (132) with which at least one of the key performance indicators fulfills the predetermined performance condition.

8. The apparatus of any preceding claim, wherein the adjustable conditions comprise at least one of the following: a failed session, a session from a certain user, a session comprising an information element with a certain value.

9. The apparatus of any preceding claim, wherein the one or more memories (102) and the computer program code (104) are further configured to, with the one or more processors (102), cause the apparatus (100) further to:
define the adjustable conditions of the dynamic filter using a naming scheme for the attributes, and mathematical expressions directed to the values of the protocol attributes and the session attributes.

10. The apparatus of any preceding claim, wherein the one or more memories (102) and the computer program code (104) are further configured to, with the one or more processors (102), cause the apparatus (100) further to:
define the dynamic filter using a parser and/or a parsing library.

11. The apparatus of any preceding claim, wherein the one or more memories (102) and the computer program code (104) are further configured to, with the one or more processors (102), cause the apparatus (100) further to:
generate the dynamic call data records such that predetermined attributes are kept and rest of the attributes are discarded, the predetermined attributes depending on a desired point of view into the monitored telecommunications network (110).

12. A method comprising the steps of:
obtaining (202) data packets captured from a monitored telecommunications network;
decoding (206) the data packets by a protocol decoder stack in order to generate decoded data packets, each decoded data packet comprising protocol attributes;
identifying (208) sessions from among the decoded data packets in order to generate identified sessions, each identified session comprising session attributes;
filtering (210) the decoded data packets and the identified sessions with a dynamic filter determining adjustable conditions for the protocol attributes and the session attributes such that the decoded data packets and the identified sessions fulfilling the adjustable conditions are kept in order to get attribute-filtered decoded data packets and attribute-filtered identified sessions;
generating (212) dynamic call data records such that their structure and contents are determined dynamically on the basis of the attribute-filtered decoded data packets and the attribute-filtered identified sessions; and
storing (214) the dynamic call data records.

13. A computer readable medium (120) comprising a set of instructions (120), which, when executed on a computer (100) cause the computer (100) to execute the steps of:
obtaining (202) data packets captured from a monitored telecommunications network;
decoding (206) the data packets by a protocol decoder stack in order to generate decoded data packets, each decoded data packet comprising protocol attributes;
identifying (208) sessions from among the decoded data packets in order to generate identified sessions, each identified session comprising session attributes;
filtering (210) the decoded data packets and the identified sessions with a dynamic filter determining adjustable conditions for the protocol attributes and the session attributes such that the decoded data packets and the identified sessions fulfilling the adjustable conditions are kept in order to get attribute-filtered decoded data packets and attribute-filtered identified sessions;
generating (212) dynamic call data records such that their structure and contents are determined dynamically on the basis of the attribute-filtered decoded data packets and the attribute-filtered identified sessions; and
storing (214) the dynamic call data records.

## Patentansprüche

1. Vorrichtung (100), welche
einen oder mehrere Prozessoren (102), und
einen oder mehrere Speicher (102), welche/r Computerprogrammcode (104) beinhaltet/n, umfasst,
wobei der eine oder die mehreren Speicher (102) und der Computerprogrammcode (104) dazu konfiguriert sind, mit dem einen oder den mehreren Prozessoren (102), die Vorrichtung (100) mindestens zu Folgendem zu veranlassen:
Erhalten von Datenpaketen (132), die von einem überwachten Telekommunikationsnetzwerk (110) erfasst wurden;
Decodieren der Datenpakete (132) durch einen Protokoll-Decoder-Stack zum Erzeugen decodierter Datenpakete, wobei jedes decodierte Datenpaket Protokollattribute umfasst;
Identifizieren von Sitzungen aus den decodierten Datenpaketen (132) zum Erzeugen identifizierter Sitzungen, wobei jede identifizierte Sitzung Sitzungsattribute umfasst;
Filtern der decodierten Datenpakete (132) und der identifizierten Sitzungen mit einem dynamischen Filter, welcher einstellbare Bedingungen für die Protokollattribute und die Sitzungsattribute festlegt, derart, dass die decodierten Datenpakete (132) und die identifizierten Sitzungen, welche die einstellbaren Bedingungen erfüllen, behalten werden, um attributgefilterte decodierte Datenpakete (132) und attributgefilterte identifizierte Sitzungen zu erhalten;
Erzeugen dynamischer Anrufdatenaufzeichnungen, derart,
dass ihre Struktur und ihr Inhalt dynamisch auf der Grundlage der attributgefilterten decodierten Datenpakete (132) und der attributgefilterten identifizierten Sitzungen bestimmt werden; und
Speichern der dynamischen Anrufdatenaufzeichnungen.

2. Vorrichtung nach Anspruch 1, wobei der eine oder die mehreren Speicher (102) und der Computerprogrammcode (104) ferner dazu konfiguriert sind, mit dem einen oder den mehreren Prozessoren (102), die Vorrichtung (100) zu Folgendem zu veranlassen:
wenn die Datenpakete (132) erhalten werden, um die Steuerebene des überwachten Telekommunikationsnetzwerks (110) zu analysieren, Behalten von Datenpaketen (132) bezüglich der Steuerebene und Verwerfen von Datenpaketen (132) bezüglich der Benutzerebene vor dem Decodieren der Datenpakete (132), oder
wenn die Datenpakete (132) erhalten werden, um die Benutzerebene des überwachten Telekommunikationsnetzwerks (110) zu analysieren, Behalten von Datenpaketen (132) bezüglich der Benutzerebene und Verwerfen von Datenpaketen (132) bezüglich der Steuerebene vor dem Decodieren der Datenpakete (132).

3. Vorrichtung nach Anspruch 1 oder 2, wobei die identifizierten Sitzungen Anrufe und/oder leitungsvermittelte Kommunikationssitzungen umfassen.

4. Vorrichtung nach einem der vorhergehenden Ansprüche, wobei die identifizierten Sitzungen Datenübertragung und/oder paketvermittelte Kommunikationssitzungen umfassen.

5. Vorrichtung nach einem der vorhergehenden Ansprüche, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Erzeugen von Protokollattributen als ein direktes Ergebnis des Decodierens der Datenpakete (132) durch den Protokoll-Decoder-Stack, und/oder
Erzeugen von Protokollattributen auf der Grundlage von Analyseergebnissen des Decodierens der Datenpakete (132) durch den Protokoll-Decoder-Stack.

6. Vorrichtung nach einem der vorhergehenden Ansprüche, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Erzeugen von Leistungskennzahlen aus den identifizierten Sitzungen;
Durchführen des Filterns der decodierten Datenpakete (132) und der identifizierten Sitzungen mit dem dynamischen Filter, wenn mindestens eine der Leistungskennzahlen eine vorbestimmte Leistungsbedingung erfüllt.

7. Vorrichtung nach Anspruch 6, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Durchführen der Erzeugung der Leistungskennzahlen aus den identifizierten Sitzungen kontinuierlich für jedes erhaltene Datenpaket (132); und
Beginnen der Durchführung des Filterns der decodierten Datenpakete und der identifizierten Sitzungen mit dem dynamischen Filter beginnend mit dem erhaltenen Datenpaket (132), mit welchem mindestens eine der Leistungskennzahlen die vorbestimmte Leistungsbedingung erfüllt.

8. Vorrichtung nach einem der vorhergehenden Ansprüche, wobei die einstellbaren Bedingungen mindestens eines der Folgenden umfassen: eine fehlgeschlagene Sitzung, eine Sitzung von einem bestimmten Benutzer, eine Sitzung, die ein Informationselement mit einem bestimmten Wert umfasst.

9. Vorrichtung nach einem der vorhergehenden Ansprüche, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Definieren der einstellbaren Bedingungen des dynamischen Filters unter Verwendung eines Namensgebungsschemas für die Attribute und mathematischer Ausdrücke ausgerichtet auf die Werte der Protokollattribute und die Sitzungsattribute.

10. Vorrichtung nach einem der vorhergehenden Ansprüche, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Definieren des dynamischen Filters unter Verwendung eines Parsers und/oder einer Parsing-Bibliothek.

11. Vorrichtung nach einem der vorhergehenden Ansprüche, wobei der eine oder die mehreren Speicher (102) und der Computerprogrammcode (104) ferner dazu konfiguriert sind, mit dem einen oder den mehreren Prozessoren (102), die Vorrichtung (100) ferner zu Folgendem zu veranlassen:
Erzeugen der dynamischen Anrufdatenaufzeichnungen, derart, dass vorbestimmte Attribute behalten werden und der Rest der Attribute verworfen wird, wobei die vorbestimmten Attribute von einer gewünschten Sicht in das überwachte Telekommunikationsnetzwerk (110) abhängen.

12. Verfahren, welches folgende Schritte umfasst:
Erhalten (202) von Datenpaketen, die von einem überwachten Telekommunikationsnetzwerk erfasst wurden;
Decodieren (206) der Datenpakete durch einen Protokoll-Decoder-Stack zum Erzeugen decodierter Datenpakete, wobei jedes decodierte Datenpaket Protokollattribute umfasst;
Identifizieren (208) von Sitzungen aus den decodierten Datenpaketen zum Erzeugen identifizierter Sitzungen,
wobei jede identifizierte Sitzung Sitzungsattribute umfasst;
Filtern (210) der decodierten Datenpakete und der identifizierten Sitzungen mit einem dynamischen Filter, welcher einstellbare Bedingungen für die Protokollattribute und die Sitzungsattribute festlegt, derart, dass die decodierten Datenpakete und die identifizierten Sitzungen, welche die einstellbaren Bedingungen erfüllen, behalten werden, um attributgefilterte decodierte Datenpakete und attributgefilterte identifizierte Sitzungen zu erhalten;
Erzeugen (212) dynamischer Anrufdatenaufzeichnungen, derart, dass ihre Struktur und ihr Inhalt dynamisch auf der Grundlage der attributgefilterten decodierten Datenpakete und der attributgefilterten identifizierten Sitzungen bestimmt werden; und
Speichern (214) der dynamischen Anrufdatenaufzeichnungen.

13. Computerlesbares Medium (120), welches einen Satz von Befehlen (120) umfasst, welche, wenn sie auf einem Computer (100) ausgeführt werden, den Computer (100) zum Ausführen der folgenden Schritte veranlassen:
Erhalten (202) von Datenpaketen, die von einem überwachten Telekommunikationsnetzwerk erfasst wurden;
Decodieren (206) der Datenpakete durch einen Protokoll-Decoder-Stack zum Erzeugen decodierter Datenpakete, wobei jedes decodierte Datenpaket Protokollattribute umfasst;
Identifizieren (208) von Sitzungen aus den decodierten Datenpaketen zum Erzeugen identifizierter Sitzungen, wobei jede identifizierte Sitzung Sitzungsattribute umfasst;
Filtern (210) der decodierten Datenpakete und der identifizierten Sitzungen mit einem dynamischen Filter, welcher einstellbare Bedingungen für die Protokollattribute und die Sitzungsattribute festlegt, derart, dass die decodierten Datenpakete und die identifizierten Sitzungen, welche die einstellbaren Bedingungen erfüllen, behalten werden, um attributgefilterte decodierte Datenpakete und attributgefilterte identifizierte Sitzungen zu erhalten;
Erzeugen (212) dynamischer Anrufdatenaufzeichnungen, derart, dass ihre Struktur und ihr Inhalt dynamisch auf der Grundlage der attributgefilterten decodierten Datenpakete und der attributgefilterten identifizierten Sitzungen bestimmt werden; und
Speichern (214) der dynamischen Anrufdatenaufzeichnungen.

## Revendications

1. Appareil (100) comprenant
un ou plusieurs processeurs (102), et
une ou plusieurs mémoires (102) comprenant un code de programme informatique (104),
les une ou plusieurs mémoires (102) et le code de programme informatique (104) étant configurés pour, avec les un ou plusieurs processeurs (102), forcer l'appareil (100) au moins à :
obtenir des paquets de données (132) capturés à partir d'un réseau de télécommunications surveillé (110) ;
décoder les paquets de données (132) par une pile de décodeurs de protocoles de manière à générer des paquets de données décodés, chaque paquet de données décodé comprenant des attributs de protocole ;
identifier des sessions parmi les paquets de données décodés (132) de manière à générer des sessions identifiées, chaque session identifiée comprenant des attributs de session ;
filtrer les paquets de données décodés (132) et les sessions identifiées avec un filtre dynamique déterminant des conditions adaptables pour les attributs de protocole et les attributs de session tels que les paquets de données décodés (132) et les sessions identifiées satisfaisant les conditions adaptables soient conservés de manière à obtenir des paquets de données décodés filtrés par attributs (132) et des sessions identifiées filtrées par attributs ;
générer des enregistrements de données d'appel dynamiques tels que leur structure et leurs contenus soient déterminés de manière dynamique sur la base des paquets de données décodés filtrés par attributs (132) et des sessions identifiées filtrées par attributs ; et
stocker les enregistrements de données d'appel dynamiques.

2. Appareil selon la revendication 1, dans lequel les une ou plusieurs mémoires (102) et le code de programme informatique (104) sont configurés en outre pour, avec les un ou plusieurs processeurs (102), forcer l'appareil (100) en outre à :
si les paquets de données (132) sont obtenus de manière à analyser le plan de commande du réseau de télécommunications surveillé (110), conserver des paquets de données (132) relatifs au plan de commande et rejeter des paquets de données (132) relatifs au plan d'utilisateur avant de décoder les paquets de données (132), ou
si les paquets de données (132) sont obtenus de manière à analyser le plan d'utilisateur du réseau de télécommunications surveillé (110), conserver des paquets de données (132) relatifs au plan d'utilisateur et rejeter des paquets de données (132) relatifs au plan de commande avant de décoder les paquets de données (132).

3. Appareil selon la revendication 1 ou 2, dans lequel les sessions identifiées comprennent des appels et/ou des sessions de communication à commutation de circuits.

4. Appareil selon une quelconque revendication précédente, dans lequel les sessions identifiées comprennent une transmission de données et/ou des sessions de communication à commutation de paquets.

5. Appareil selon une quelconque revendication précédente, dans lequel les une ou plusieurs mémoires (102) et le code de programme informatique (104) sont configurés en outre pour, avec les un ou plusieurs processeurs (102), forcer l'appareil (100) en outre à :
générer des attributs de protocole sur la base d'un résultat direct du décodage des paquets de données (132) par la pile de décodeurs de protocoles, et/ou générer des attributs de protocole sur la base de résultats d'analyse du décodage des paquets de données (132) par la pile de décodeurs de protocoles.

6. Appareil selon une quelconque revendication précédente, dans lequel les une ou plusieurs mémoires (102) et le code de programme informatique (104) sont configurés en outre pour, avec les un ou plusieurs processeurs (102), forcer l'appareil (100) en outre à :
générer des indicateurs clés de performance à partir des sessions identifiées ; et
effectuer le filtrage des paquets de données décodés (132) et des sessions identifiées avec le filtre dynamique si au moins un des indicateurs clés de performance satisfait une condition de performance prédéterminée.

7. Appareil selon la revendication 6, dans lequel les une ou plusieurs mémoires (102) et le code de programme informatique (104) sont configurés en outre pour, avec les un ou plusieurs processeurs (102), forcer l'appareil (100) en outre à :
effectuer la génération des indicateurs clés de performance à partir des sessions identifiées de manière continue pour chaque paquet de données obtenu (132) ; et
commencer à effectuer le filtrage des paquets de données décodés et des sessions identifiées avec le filtre dynamique en commençant à partir du paquet de données obtenu (132) avec lequel au moins un des indicateurs clés de performance satisfait la condition de performance prédéterminée.

8. Appareil selon une quelconque revendication précédente, dans lequel les conditions adaptables comprennent au moins un parmi ce qui suit : une session échouée, une session à partir d'un certain utilisateur, une session comprenant un élément d'informations avec une certaine valeur.

9. Appareil selon une quelconque revendication précédente, dans lequel les une ou plusieurs mémoires (102) et le code de programme informatique (104) sont configurés en outre pour, avec les un ou plusieurs processeurs (102), forcer l'appareil (100) en outre à :
définir les conditions adaptables du filtre dynamique en utilisant un schéma de dénomination pour les attributs et les expressions mathématiques portant sur les valeurs des attributs de protocole et des attributs de session.

10. Appareil selon une quelconque revendication précédente, dans lequel les une ou plusieurs mémoires (102) et le code de programme informatique (104) sont configurés en outre pour, avec les un ou plusieurs processeurs (102), forcer l'appareil (100) en outre à :
définir le filtre dynamique en utilisant un analyseur syntaxique et/ou une bibliothèque d'analyse syntaxique.

11. Appareil selon une quelconque revendication précédente, dans lequel les une ou plusieurs mémoires (102) et le code de programme informatique (104) sont configurés en outre pour, avec les un ou plusieurs processeurs (102), forcer l'appareil (100) en outre à :
générer les enregistrements de données d'appel dynamiques de manière que des attributs prédéterminés soient conservés et le reste des attributs soient rejetés, les attributs prédéterminés dépendant d'un point de vue désiré dans le réseau de télécommunications surveillé (110).

12. Procédé comprenant les étapes suivantes :
obtenir (202) des paquets de données capturés à partir d'un réseau de télécommunications surveillé ;
décoder (206) les paquets de données par une pile de décodeurs de protocoles de manière à générer des paquets de données décodés, chaque paquet de données décodé comprenant des attributs de protocole ;
identifier (208) des sessions parmi les paquets de données décodés de manière à générer des sessions identifiées, chaque session identifiée comprenant des attributs de session ;
filtrer (210) des paquets de données décodés et des sessions identifiées avec un filtre dynamique déterminant des conditions adaptables pour les attributs de protocole et les attributs de session telles que les paquets de données décodés et les sessions identifiées satisfaisant les conditions adaptables soient conservés de manière à obtenir des paquets de données décodés filtrés par attributs et des sessions identifiées filtrées par attributs ;
générer (212) d'enregistrements de données d'appel dynamiques tels que leur structure et leurs contenus soient déterminés de manière dynamique sur la base des paquets de données décodés filtrés par attributs et des sessions identifiées filtrées par attributs ; et
stocker (214) des enregistrements de données d'appel dynamiques.

13. Support lisible par ordinateur (120) comprenant un jeu d'instructions (120) qui, quand elles sont exécutées sur un ordinateur (100), font exécuter à l'ordinateur (100) les étapes suivantes :
obtenir (202) les paquets de données capturés à partir d'un réseau de télécommunications surveillé ;
décoder (206) les paquets de données par une pile de décodeurs de protocoles de manière à générer des paquets de données décodés, chaque paquet de données décodé comprenant des attributs de protocole ;
identifier (208) des sessions parmi les paquets de données décodés de manière à générer des sessions identifiées, chaque session identifiée comprenant des attributs de session ;
filtrer (210) les paquets de données décodés et des sessions identifiées avec un filtre dynamique déterminant des conditions adaptables pour les attributs de protocole et les attributs de session telles que les paquets de données décodés et les sessions identifiées satisfaisant les conditions adaptables soient conservés de manière à obtenir des paquets de données décodés filtrés par attributs et des sessions identifiées filtrées par attributs ;
générer (212) des enregistrements de données d'appel dynamiques tels que leur structure et leurs contenus soient déterminés de manière dynamique sur la base des paquets de données décodés filtrés par attributs et des sessions identifiées filtrées par attributs ; et
stocker (214) des enregistrements de données d'appel dynamiques.
